(19) Europäisches Patentamt
European Patent Office
Office européen des brevets

(11)     **EP 3 699 823 A1**

(12)                    **EUROPEAN PATENT APPLICATION**

(43) Date of publication:
26.08.2020  Bulletin 2020/35

(21) Application number: **20151942.8**

(22) Date of filing: **15.01.2020**

(51) Int Cl.:
**G06K 9/62** (2006.01)        **G06N 3/04** (2006.01)
**G06N 3/08** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **20.02.2019   CN 201910126230**

(71) Applicant: **FUJITSU LIMITED**
**Kanagawa 211-8588 (JP)**

(72) Inventors:
• **Wang, Mengjiao**
**Beijing, 100027 (CN)**
• **Liu, Rujie**
**Beijing, 100027 (CN)**

(74) Representative: **Hoffmann Eitle**
**Patent- und Rechtsanwälte PartmbB
Arabellastraße 30
81925 München (DE)**

(54)    **MODEL OPTIMIZATION METHOD, DATA IDENTIFICATION METHOD AND DATA
IDENTIFICATION DEVICE**

(57)    The present disclosure relates to a model optimization method, a data identification method and a data identification device. A method for optimizing a data identification model to be optimized comprises: acquiring a loss function of a data identification model to be optimized; calculating weight vectors in the loss function which correspond to classes; performing normalization processing on the weight vectors; updating the loss function by increasing an included angle between any two of the weight vectors; optimizing the data identification model to be optimized based on the updated loss function.

```
┌─────────────────────────────────┐
│ Acquire loss function of data   │──401
│ identification model to be      │
│ optimized                       │
└─────────────────────────────────┘
                │
                ▼
┌─────────────────────────────────┐
│ Calculate weight vectors in     │──402
│ loss function which correspond  │
│ to classes                      │
└─────────────────────────────────┘
                │
                ▼
┌─────────────────────────────────┐
│ Perform normalization           │──403
│ processing on weight vectors    │
└─────────────────────────────────┘
                │
                ▼
┌─────────────────────────────────┐
│ Update loss function by         │──404
│ increasing an included angle    │
│ between any two of weight       │
│ vectors                         │
└─────────────────────────────────┘
                │
                ▼
┌─────────────────────────────────┐
│ Optimize data identification    │──405
│ model to be optimized based on  │
│ the updated loss function       │
└─────────────────────────────────┘
```

**Figure 4**

EP 3 699 823 A1

**Description**

**FIELD OF THE INVENTION**

The present disclosure relates to a model optimization method, a data identification method and a data identification device. More particularly, the present invention relates to an optimization learning method of a data identification model so as to make it possible to improve an accuracy rate of data identification when identifying data with an optimized data identification model.

**BACKGROUND**

Deep neural networks (DNNs) are the foundations of many artificial intelligence applications at present. Due to the groundbreaking applications of the DNNs in voice recognition and image recognition, the number of applications using the DNNs has gained an explosive growth. These DNNs have been deployed to various applications from automatic driving vehicles, pathological detection to complicated games and the like. In many fields, the DNNs can surpass accuracy rates of human decisions. However, the outstanding performances of the DNNs originate from their capability of extracting high layer features from raw data by a statistical learning method so as to obtain, in a mass of data, an effective representation of an input space. This differs from the previous method of manually extracting features or designing a rule by an expert.

Taking face recognition of persons as an example, in training of a DNN model for face recognition, first, it is needed to train a classification model on a data set of a large number of different persons. For the purpose of validation, features are extracted from an image pair with the classification model, and then a similarity of the image pair is calculated to test whether the image pair belongs to the same person. However, in the present DNN models and some optimization models, a focus is put on reducing intra-class differences so as to realize better clustering on face images of identical persons, but a circumstance of erroneous recognition still will occur when approximate faces are to be recognized or when there is a possibility of confusing features of different faces which are mapped through face feature extraction.

Therefore, the present invention proposes a novel training method for an optimized DNN model, and a data identification method and device based on an optimized DNN model. It should be noted that, the above introduction to the technical background is made only for making it convenient to clearly and completely describe the technical solutions of the present application, and making it convenient for the understanding by those skilled in the art. It is not allowed to construe, only because these solutions have been described in the background section of the present application, that the above technical solutions are well-known to those skilled in the art.

**SUMMARY OF THE INVENTION**

A brief summary of the present disclosure will be given below to provide a basic understanding of some aspects of the present disclosure. It should be understood that the summary is not an exhaustive summary of the present disclosure. It does not intend to define a key or important part of the present disclosure, nor does it intend to limit the scope of the present disclosure. The object of the summary is only to briefly present some concepts, which serves as a preamble of the detailed description that follows.

To achieve the object of the present disclosure, according to an aspect of the present disclosure, there is provided a method for optimizing a data identification model, comprising: acquiring a loss function of a data identification model to be optimized; calculating weight vectors in the loss function which correspond to classes; performing normalization processing on the weight vectors; updating the loss function by increasing an included angle between any two of the weight vectors; optimizing the data identification model to be optimized based on the updated loss function.

According to another aspect of the present disclosure, there is provided a data identification method, comprising: performing data identification using an optimized data identification model obtained by the method for optimizing a data identification model.

According to another aspect of the present disclosure, there is further provided a data identification device, comprising: at least one processor configured to implement the data identification method.

According to the contents of the present disclosure, there is provided a novel training method for an optimized DNN model, and a data identification method and device based on an optimized DNN model. According to the contents of the present disclosure, when data identification is performed with a DNN model optimized by the optimization method according to the contents of the present disclosure, it is possible to further reduce a probability of occurrence of erroneous identification when identifying different objects having approximate features and when there is a possibility of confusing features mapped through feature extraction, so as to improve an accuracy rate of data identification.

## BRIEF DESCRIPTION OF THE DRAWINGS

The above and other objects, features and advantages of the present disclosure would be more easily understood with reference to the following description of embodiments of the present disclosure combined with the appended drawings. In the appended drawings:

Figure 1 is a schematic view showing a system block diagram of a deep neural network;

Figure 2 is a schematic view showing a portion in a deep neural network according to an embodiment of the present disclosure;

Figure 3A is a schematic view showing a training model according to an embodiment of the present disclosure;

Figure 3B is a schematic view showing a model deployment according to an embodiment of the present disclosure;

Figure 4 is a flowchart showing a method for optimizing a data identification model according to an embodiment of the present disclosure;

Figure 5 is a schematic view showing a data identification device according to an embodiment of the present disclosure;

Figure 6 is a structure diagram showing a general-purpose machine of a device that can be used to implement the method for optimizing a data identification model or the data identification method according to the embodiments of the present disclosure.

## DETAILED DESCRIPTION OF THE INVENTION

Hereinafter, exemplary embodiments of the present disclosure will be described combined with the appended drawings. For the sake of clarity and conciseness, the description does not describe all features of actual embodiments. However, it should be understood that in implementing embodiments, those skilled in the art could make many decisions specific to the embodiments, so as to implement the embodiments, and these decisions possibly will vary as embodiments are different.

It should also be noted herein that, to avoid the present disclosure from being obscured due to unnecessary details, only those components closely related to the solutions according to the present disclosure are shown in the appended drawings, while omitting other details not closely related to the present disclosure.

The exemplary embodiments disclosed herein will be described with reference to the drawings below. It should be noted that, for the sake of clarity, representations and illustrations of portions and processes which are known to those skilled in the art but not related to the exemplary embodiments are omitted in the drawings and the descriptions.

Those skilled in the art could understand that, various aspects of the exemplary embodiments may be implemented as systems, methods or computer program products. Therefore, various aspects of the exemplary embodiments may be specifically implemented in the following forms, that is, may be a full hardware embodiment, a full software embodiment (including firmware, resident software, microcode, etc.), or an embodiment of combined software and hardware portions, which may be generally referred to as "circuitry", "module" or "system" herein. Further, various aspects of the exemplary embodiments may take the form of a computer program product embodied as one or more computer readable media having embodied thereon computer readable program code. Computer programs may be distributed, for example, over a computer network, or computer programs may be located on one or more remote servers or embedded into a memory of a device.

It is possible to use any combination of one or more computer readable media. The computer readable medium may be a computer readable signal medium or a computer readable recording medium. The computer readable medium may be, for example, but not limited to, an electric, magnetic, optical, electromagnetic, infrared, or semiconductor system, apparatus or device, or any appropriate combination thereof. More detailed examples (non-exhaustive list) of the computer readable medium include: an electric connection with one or more wires, a portable computer magnetic disk, a hard disk, a random access memory (RAM), a read-only memory (ROM), an erasable programmable read-only memory (EPROM or flash memory), an optical fibre, a portable compact magnetic disk read-only memory (CD-ROM), an optical storage device, a magnetic storage device, or any appropriate combination thereof. In the context herein, the computer readable medium may be any tangible medium which contains or stores a program to be used by an instruction execution system, apparatus or device or linked to an instruction execution system, apparatus or device.

The computer readable signal medium may include, for example, a data signal carrying therein computer readable program code which is propagated in a base band or as a portion of a carrier. Such a propagation signal may take any appropriate form, including but not limited to, an electromagnetic form, an optical form or any appropriate combination thereof.

The computer readable signal medium may be any computer readable medium differing from the computer readable recording medium and capable of communicating, propagating or transmitting a program to be used by an instruction execution system, apparatus or device or linked to an instruction execution system, apparatus or device.

Program code embodied in the computer readable medium may be transmitted by adopting any appropriate medium, including but not limited to, in wireless form, in wired form, through an optical cable, through radio frequency and the like, or any appropriate combination thereof.

Computer program code for implementing operations of various aspects of the exemplary embodiments disclosed herein may be written in any combination of one or more program design languages, which comprise object-orientated program design languages, such as Java, Smalltalk, C++ and the like, and which further comprise conventional procedural program design languages, such as "C" program design language or similar program design languages.

Various aspects of the exemplary embodiments disclosed herein will be described with reference to flowcharts and/or block diagrams of the method, apparatus (system) and computer program product according to the exemplary embodiments below. It should be noted that, each box in the flowcharts and/or block diagrams and a combination of respective boxes in the flowcharts and/or block diagrams may all be realized by computer program instructions. These computer program instructions may be provided to processors of a general-purpose computer, a special-purpose computer or other programmable data processing apparatus to produce a machine, such that these instructions executed by the computer or the other programmable data processing apparatuses generate a device for implementing functions/operations stipulated in the boxes in the flowcharts and/or block diagrams.

It is also possible to store these computer program instructions in a computer readable medium capable of guiding a computer or other programmable data processing apparatuses to operate in a specific manner, such that the instructions stored in the computer readable medium generate a manufactured product including instructions for implementing the functions/operations stipulated in the boxes in the flowcharts and/or block diagrams.

It is also possible to upload the computer program instructions onto a computer or other programmable data processing apparatuses, causing a series of operation steps to be performed on the computer or the other programmable data processing apparatuses to generate a computer-implemented process, such that the instructions executed on the computer or the other programmable data processing apparatuses provide a process of implementing the functions/operations stipulated in the boxes in the flowcharts and/or block diagrams.

A neural network related to the present invention will be introduced first, below.

The neural network uses artificial neurons configured by simplifying functions of biological neurons, and the artificial neurons may be connected with each other by edges having connection weights. The connection weights (parameters of the neural network) are predetermined values of the edges, and may also be referred to as connection strengths. The neural network may perform a cognition function or a learning process of a human brain through the artificial neurons. The artificial neurons may also be referred to as nodes.

The neural network may comprise a plurality of layers. For example, the neural network may comprise an input layer, a hidden layer and an output layer. The input layer may receive an input for performing training and send the input to the hidden layer, and the output layer may generate an output of the neural network based on signals received from nodes of the hidden layer. The hidden layer may be arranged between the input layer and the output layer. The hidden layer may change training data received from the input layer to values which are easily predicted. Nodes included in the input layer and the hidden layer may be connected with each other by edges having connection weights, and nodes included in the hidden layer and the output layer may also be connected with each other by edges having connection weights. The input layer, the hidden layer and the output layer may comprise a plurality of nodes, respectively.

The neural network may comprise a plurality of hidden layers. The neural network comprising a plurality of hidden layers may be referred to as a deep neural network. Training the deep neural network may be referred to as deep learning. Nodes included in the hidden layers may be referred to as hidden nodes. A number of hidden layers provided in the deep neural network is not limited to any specific number.

The neural network may be trained by supervised learning. The supervised learning refers to a method of providing input data and output data corresponding thereto to a neural network, and updating connection weights of edges so as to output the output data corresponding to the input data. For example, a model training apparatus may update connection weights of edges between artificial neurons by delta rule and error back propagation learning.

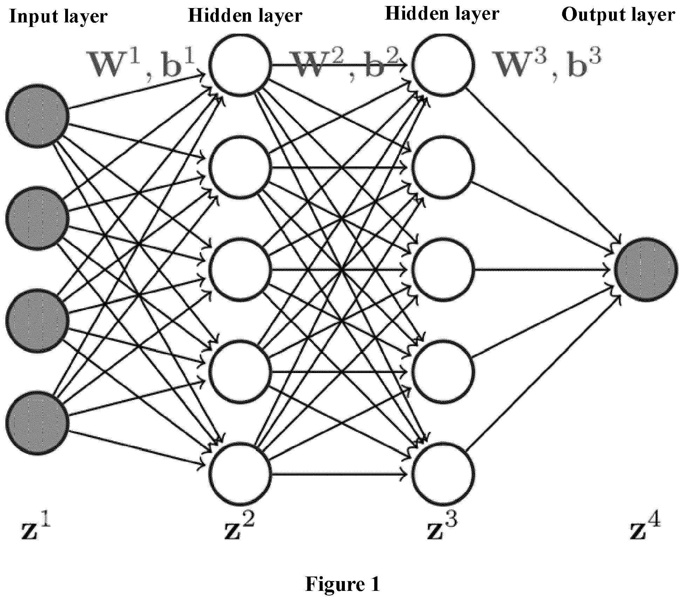

Figure 1 is a schematic view showing a system block diagram of a deep neural network.

Deep neural networks (DNNs) based on the neural network introduced above are neural networks of deep hierarchies. The deep neural network structurally has no difference from the traditional multi-layer perceptrons, and is also the same in terms of algorithm at the time of performing supervised learning. The only difference is that this network shall first perform unsupervised learning before performing supervised learning and then take weight values learned through the unsupervised leaning as initial values of the supervised leaning to perform training. This change actually corresponds to a reasonable assumption. P(x) is used to represent a representation of data obtained by performing pretraining on a network using the unsupervised learning, and then training (such as a BP algorithm) is performed on the network using the supervised learning, so as to obtain P(Y|X), wherein Y is an output (such as a class label). The assumption deems that learning of P(X) is helpful for learning of P(Y|X). This learning concept is helpful for reducing a risk of overfitting relative to the mere supervised learning, because it not only learns a conditional probability distribution P(Y|X) but also learns a joint probability distribution of X and Y.

A training method for optimizing a data identification model according to an embodiment of the present disclosure is implemented using a deep neural network. The deep neural network is a neural network having at least one hidden layer. Similarly to shallow neural networks, the deep neural network is also capable of providing modeling for a complicated non-linear system, but extra hierarchies provide more abstract hierarchies for the model, thus improving the capability of the model. The deep neural network is a discriminative model, and may be trained by a back propagation algorithm. Weight updating may perform calculation by using a function to perform a stochastic gradient descent method. The selection of this function is related to a type (e.g., supervised learning, non-supervised learning, enhanced learning) of learning and an activation function. For example, to perform supervised learning on a multi-classification problem, the general selection is using ReLU as an activation function, and using a cross entropy as a cost function. Further, the deep neural network also uses a loss function to measure performances of the model.

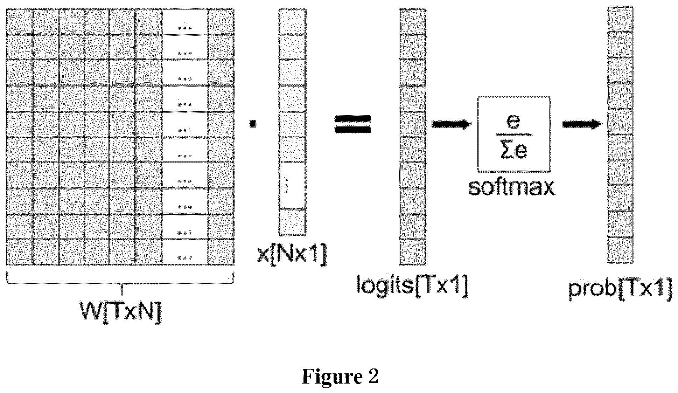

Figure 2 is a schematic view showing a portion in a deep neural network according to an embodiment of the present disclosure.

As stated above, the deep neural network uses a loss function to measure performances of the model. Specifically, through calculation between a predicted value and a real value, a value is obtained, and this value is used for informing whether the model also has a space which can be continued to be optimized at the time of model fitting (the object of the model is hoping the loss function to be minimum in models having been fitted). Generally, each algorithm of machine learning will have a target function, and a calculation process of the algorithm is a process by performing optimization on the target function. In a classification or regression problem, the loss function is generally used as a target function thereof. The loss function is used to evaluate an extent to which the predicted value and the real value of the model are not the same, and the performances of the model are generally better if the loss function is better. Figure 2 is a schematic view showing a portion in a deep neural network according to the embodiment of the present disclosure, so as to make it possible to understand a specific position of a Softmax function in the network.

As shown in Figure 2, the left portion of the equals sign in the figure is a full connect layer, W is a parameter of the full connect layer, also referred to as a weight, and X is an input of the full connect layer, i.e., a feature. It can be seen from Figure 2 that the feature X is a vector of N*1, which is obtained after processing by a plurality of convolutional layers and pooling layers upstream of the full connect layer. Assuming that what is connected upstream of the full connect layer is a convolutional layer, with an output of the convolutional layer being 100 features which are each sized 4*4, then these features will be converted to vectors of N*1 before being inputted to the full connect layer (at this time, N is 100*4*4=1600). Turning to W after explanation of X, W is a parameter of the full connect layer, and is a matrix of T*N, where N corresponds to N of X, T represents a class number, for example, if a class number of classification is 7, then T is 7. Training a deep neural network, as far as the full connect layer is concerned, is finding the most appropriate W matrix. Therefore, the full connect layer is performing WX to obtain a vector of T*1 (i.e., logits[T*1] in Figure 2), each number inside this vector has no size limitation, that is, is from negative infinity to positive infinity. Then in case of the multi-classification problem, a Softmax layer generally will be connected downstream of the full connect layer, an input of this Softmax is a vector of T*1, an output of this Softmax is also a vector of T*1 (i.e., prob[T*1] in Figure 2, wherein a value of each element in this vector represents a probability of this sample to belong to each class), and a range of the magnitude of a value of each element in an output vector is from 0 to 1 so as to represent a probability. That is, output vectors of the Softmax are probabilities of the sample to belong to respective classes.

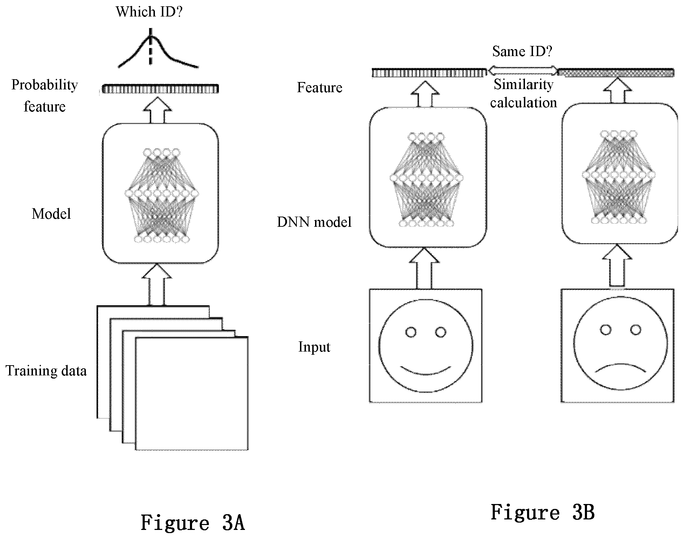

Figure 3A is a schematic view showing a training model according to an embodiment of the present disclosure.

Figure 3B is a schematic view showing a model deployment according to an embodiment of the present disclosure.

Herein, description is made by taking a face image as an example. It should be noted that, taking a face image as an example to make description is only for the purpose of illustration, but not for limitation. To train a validation model, it is needed to train a classification model on a data set having a large number of IDs (identities). In model deployment, the classification model is used for extracting features from an image pair. Then, a similarity between the image pair is calculated to validate whether the image pair is from the same ID.

The training of the classification model may be as shown in Figure 3A, and the deployment of the face validation model may be as shown in Figure 3B. A difference between outputs of the models may be represented as the Softmax loss function as shown by the following equation.

$$L_s = -\sum_{i=1}^{m} log \frac{e^{W_{y^i}^T f_{x^i}}}{\sum_{j=1}^{n} e^{W_{y^j}^T f_{x^i}}}$$

(1)

In the equation (1), $L_s$ represents a Softmax loss, $m$ represents the total number of classes (the total number of samples $x^i$), $y^i$ is a label of $x^i$, $f_{xi}$ represents an output feature of the sample $x^i$ outputted through a model, $W$ is a coefficient matrix, $W_{yi}$ represent a center of the class $y^i$, all these parameters are conventional parameters in Softmax, and $T$ is a transposition operation of a matrix.

The purpose of training the deep neural network using the Softmax loss function is causing a value of $W_{y^i}^T f_{x^i}$ to be as large as possible such that a loss will be as small as possible, i.e., causing a prediction value obtained by performing prediction using a model to approach a real value.

$$W_{y^i}^T f_{x^i} = \|W_{y^i}\| \|f_{x^i}\| cos\theta$$

(2)

In the equation (2), $\theta$ is an included angle between $W_{yi}$ and $f_{xi}$, which means that it is needed to cause the included angle $\theta$ between $W_{yi}$ and $f_{xi}$ to be as small as possible in order to make a value of the Softmax loss function to be as small as possible. In a process of causing the value of the Softmax loss function to gradually become small, $f_{xi}$ gradually approach the center of the class $y^i$, $W_{yi}$. may also be referred to as a weight vector in the loss function which corresponds to the class, because $W_{yi}$ in the equation are also weights influencing the value of $W_{y^i}^T f_{x^i}$, wherein the weight vector is an M-dimensional vector, where M is an integer greater than 1.

Description about how to reduce an intra-class difference by reducing the included angle between $W_{yi}$ and $f_{xi}$ has been described above. However, if the center of the class $y^i$ is not reasonably distributed, even if an intra-class difference is reduced by reducing the included angle between $W_{yi}$ and $f_{xi}$ (such that intra-class samples become more aggregated together), if an inter-class difference becomes very small due to the above unreasonable distribution, it is also possible to cause an unsatisfactory classification result. For example, if the centers of the respective classes approach each other, the training on the classification model will also lower the capability of discriminating the extracted features.

Causing the centers $W_{yi}$ of the respective classes to be distant from each other as far as possible means that an included angle $\alpha$ between each two class centers $W_{yi}$ shall be as large as possible. In other words, a point product between each two class centers $W_{yi}$ having been subjected to normalization processing shall be as small as possible.

Herein, on the basis of the present overall loss, a new loss $L_C$ is introduced to represent an included angle between each two class centers $W_{yi}$ having been subjected to normalization processing.

$$M = \begin{bmatrix} exp(W_1'^T W_1') & exp(W_1'^T W_2') & exp(W_1'^T W_3') & \dots & exp(W_1'^T W_{n-1}') & exp(W_1'^T W_n') \\ & exp(W_2'^T W_2') & exp(W_2'^T W_3') & \dots & exp(W_2'^T W_{n-1}') & exp(W_2'^T W_n') \\ & & exp(W_3'^T W_3') & \dots & exp(W_3'^T W_{n-1}') & exp(W_3'^T W_n') \\ & & & \dots & & \\ & & & & exp(W_{n-1}'^T W_{n-1}') & exp(W_{n-1}'^T W_n') \\ & & & & & exp(W_n'^T W_n') \end{bmatrix}$$

(3)

$$\min\{L_c = \sum_{i=1}^{n}\sum_{j=i}^{n} M(i,j)\} \qquad (4)$$

In the equation (3) and the equation (4), the symbol ' represents a normalization processing operation. Data normalization processing is a basic work of data mining. Different evaluation indices generally have different dimensions and dimension units, and such a case will influence a result of data analysis. To eliminate dimension influences between indices, it is needed to perform data normalization processing, so as to solve the comparability between data indices. The specific normalization processing manner will not be repeatedly described herein. As such, an updating process may be performed according to the following equation (5):

$$\widehat{W'_i} = W'_i + \mu \frac{\partial L_c}{\partial W'_i} \qquad (5)$$

In the equation (5), $\mu$ is a learning rate.

The included angle between each two class centers $W_{yi}$ having been subjected to normalization in the above manner is increased, and thereby the centers of the respective classes are updated or in other words the weight vectors in the loss function which correspond to the classes are updated, thereby realizing updating of respective loss functions of the deep neural network, with the Softmax function being included therein. Such updating also reduces an inter-class difference while ensuring a small intra-class difference; thus actually, training a model based on an updated loss function realizes optimization on a data identification model to be optimized.

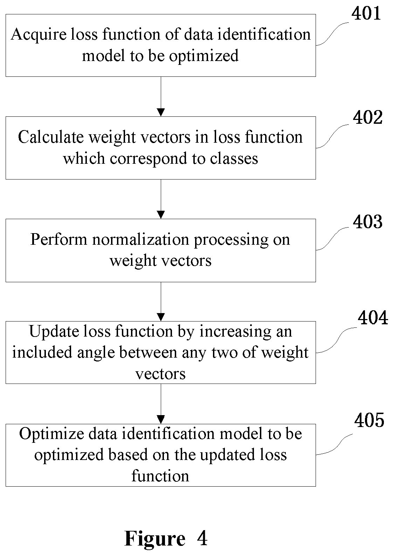

Figure 4 is a flowchart showing a method for optimizing a data identification model according to an embodiment of the present disclosure.

In step 401, a loss function of a data identification model to be optimized is acquired, and specifically, the data identification model to be optimized may be either a ready-made, existing model or a model currently being trained. Next, in step 402, weight vectors in the loss function which correspond to classes are calculated, and specifically, the weight vectors which correspond to the classes as described by the equation (2) are further calculated by acquiring the loss function in the model. In step S403, normalization processing is performed on the weight vectors. Data normalization processing is a basic work of data mining. Different evaluation indices generally have different dimensions and dimension units, and such a case will influence a result of data analysis. To eliminate dimension influences between indices, it is needed to perform data normalization processing, so as to solve the comparability between data indices. The specific normalization processing manner will not be repeatedly described herein. Next, in step 404, the loss function is updated by increasing an included angle between any two of the weight vectors, and reference may be made to the foregoing description for the specific manner of increasing the included angle. Finally, the flow enters step 450, in which the data identification model to be optimized is optimized based on the updated loss function, and specifically, in step 404, in the case where the included angle between any two weight vectors among the weight vectors having been subjected to normalization is increased, the centers of the respective classes are thereby updated or in other words the weight vectors in the loss function which correspond to the classes are thereby updated, thereby realizing updating of respective loss functions of the deep neural network, with the Softmax function being included therein. Such updating also reduces an inter-class difference while ensuring a small intra-class difference; thus actually, after the step 405 ends, training a model based on an updated loss function realizes optimization on a data identification model to be optimized.

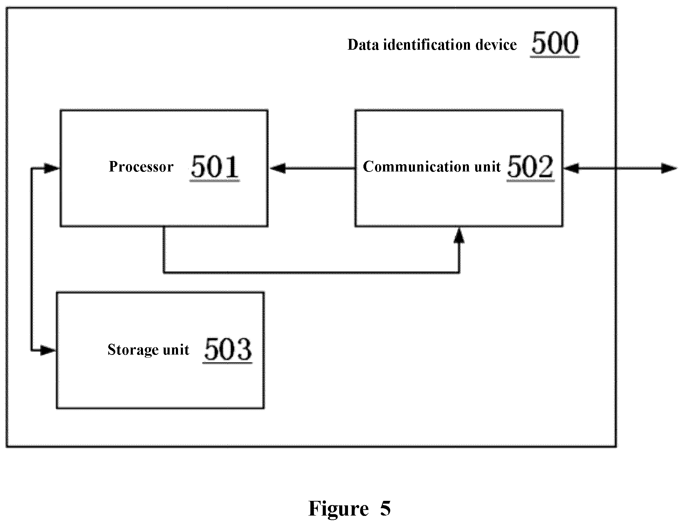

Figure 5 is a schematic view showing a data identification device according to an embodiment of the present disclosure.

Figure 5 shows a data identification device 500, comprising at least one processor 501 configured to implement a data identification method. The data identification device may further comprise a storage unit 503 and/or a communication unit 502, wherein the storage unit 503 is used for storing data to be identified and/or data obtained after identification, and the communication unit 502 is used for receiving data to be identified and/or transmitting data obtained after identification.

According to various embodiments of the present disclosure, input data of the data identification model may comprise one of image data, voice data or text data.

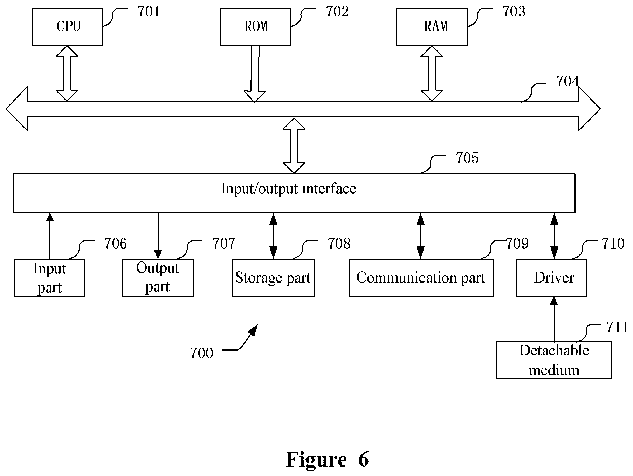

Figure 6 is a structure diagram showing a general-purpose machine 700 that can be used to implement an information processing device and an information processing method according to the embodiments of the present disclosure. The general-purpose machine 700 may be, for example, a computer system. It should be noted that, the general-purpose machine 700 is only an example, but does not suggest a limitation to a use range or function of the method and device according to the present disclosure. Also, the general-purpose machine 700 should not be construed as having a dependency or demand for any assembly or a combination thereof as shown in the above-mentioned information processing method and information processing device.

In Figure 6, a Central Processing Unit (CPU) 701 executes various processing according to programs stored in a Read-Only Memory (ROM) 702 or programs loaded from a storage part 708 to a Random Access Memory (RAM) 703. In the RAM 703, data needed when the CPU 701 executes various processing and the like is also stored according to requirements. The CPU 701, the ROM 702 and the RAM 703 are connected to each other via a bus 704. An input/output interface 705 is also connected to the bus 704.

The following components are connected to the input/output interface 705: an input part 706 (including a keyboard, a mouse and the like); an output part 707 (including a display, such as a Cathode Ray Tube (CRT), a Liquid Crystal Display (LCD) and the like, as well as a speaker and the like); the storage part 708 (including a hard disc and the like); and a communication part 706 (including a network interface card such as an LAN card, a modem and the like). The communication part 706 executes communication processing via a network such as the Internet. According to requirements, a driver 710 is also connected to the input/output interface 705. A detachable medium 711 such as a magnetic disc, an optical disc, a magnetic optical disc, a semiconductor storage and the like is installed on the driver 710 according to requirements, such that computer programs read therefrom are installed in the storage part 708 according to requirements.

In a case where the foregoing series of processing is implemented by software, programs constituting the software are installed from a network such as the Internet or a recording medium such as the detachable medium 711.

Those skilled in the art should understand that, such a recording medium is not limited to the detachable medium 711 in which programs are stored and which are distributed separately from an apparatus to provide the programs to users as shown in Figure 6. Examples of the detachable medium 711 include a magnetic disc (including a floppy disc), a compact disc (including a Compact Disc Read-Only Memory (CD-ROM) and a Digital Versatile Disc (DVD), a magneto optical disc (including a Mini Disc (MD) (registered trademark)), and a semiconductor storage. Alternatively, the recording medium may be hard discs and the like, included in the ROM 702 and the storage part 708, in which programs are stored, and are distributed together with the apparatus containing them to users.

Further, the present disclosure also proposes a computer program product having stored thereon computer readable program instructions. The instruction code, when read and executed by a computer, can implement the above-mentioned information processing method according to the present disclosure. Accordingly, the above-listed various storage media for carrying such program instructions are also included within the scope of the present disclosure.

Detailed description has been made above by means of block diagrams, flowcharts and/or embodiments, setting forth the detailed embodiments of the apparatuses and/or method according to the embodiments of the present disclosure. When these block diagrams, flowcharts and/or embodiments include one or more functions and/or operations, those skilled in the art would appreciate that the respective functions and/or operations in these block diagrams, flowcharts and/or embodiments could be separately and/or jointly implemented by means of various hardware, software, firmware or any substantive combination thereof. In one embodiment, several portions of the subject matter described in the present specification could be realized by an Application Specific Integrated Circuit (ASIC), a Field Programmable Gate Array (FPGA), a Digital Signal Processor (DSP) or other integrated forms. However, those skilled in the art would recognize that, some aspects of the embodiments described in the present specification could be equivalently implemented wholly or partially in the form of one or more computer programs running on one or more computers (e.g., in the form of one or more computer programs running on one or more computer systems), in the form of one or more programs running on one or more processors (e.g., in the form of one or more programs running on one or more microprocessors), in the form of firmware, or in the form of any substantive combination thereof; moreover, according to the contents of the disclosure in the present specification, designing circuitry for the present disclosure and/or writing a code for the software and/or firmware of the present disclosure are completely within the ability of those skilled in the art.

It should be emphasized that, the term "comprise/include" used herein refers to presence of features, elements, steps or assemblies, but does not preclude presence of one or more other features, elements, steps or assemblies. The terms relating to ordinal numbers do not represent implementation orders or importance degrees of the features, elements, steps or assemblies defined by these terms, but are only used for performing identification among these features, elements, steps or assemblies for the sake of clarity of description.

In conclusion, in the embodiments of the present disclosure, the present disclosure provides the following solutions, but is not limited hereto:

Solution 1: A method for optimizing a data identification model, comprising:

acquiring a loss function of a data identification model to be optimized;

calculating weight vectors in the loss function which correspond to classes;

performing normalization processing on the weight vectors;

updating the loss function by increasing an included angle between any two of the weight vectors;

optimizing the data identification model to be optimized based on the updated loss function.

Solution 2: The method according to Solution 1, wherein the data identification model to be optimized is obtained through deep neural network training.

Solution 3. The method according to Solution 1, wherein optimizing the data identification model to be optimized based on the updated loss function further comprises:
training a new data identification model based on the updated loss function, wherein the new data identification model is a data identification model after optimization is performed on the data identification model to be optimized

Solution 4: The method according to Solution 2 or 3, wherein the data identification model is obtained through training by causing a function value of the loss function to be minimum.

Solution 5. The method according to Solution 1, 2 or 3, wherein the loss function comprises Softmax loss function.

Solution 6. The method according to Solution 1, 2 or 3, wherein the loss function comprises Logit loss function.

Solution 7. The method according to Solution 1, 2 or 3, wherein the loss function comprises feature loss function.

Solution 8. The method according to Solution 1, 2 or 3, wherein one class corresponds to one weight vector.

Solution 9. The method according to Solution 8, wherein the weight vector are M-dimensional vector, where M is an integer greater than 1.

Solution 10. The method according to Solution 1, 2 or 3, wherein the data comprises one of image data, voice data or text data.

Solution 11. The method according to Solution 2, wherein the data identification model to be optimized is obtained through convolutional neural network training.

Solution 12. A data identification method, comprising:
performing data identification using an optimized data identification model obtained by the method for optimizing a data identification model according to one of Solutions 1 to 11.

Solution 13. A data identification device, comprising:
at least one processor configured to implement the method according to Solution 12.

Solution 14. A computer readable recording medium having stored thereon program instructions that, when executed by a computer, are used for implementing the method according to Solutions 1-12.

Although the present disclosure has been disclosed above by describing the detailed embodiments of the present disclosure, it should be understood that those skilled in the art could carry out various modifications, improvements or equivalents for the present disclosure within the spirit and scope of the appended claims. Such modifications, improvements or equivalents should also be regarded as being included within the scope of protection of the present disclosure.

## Claims

1. A method for optimizing a data identification model, comprising:

    acquiring (401) a loss function of a data identification model to be optimized;

calculating (402) weight vectors in the loss function which correspond to classes;

performing (403) normalization processing on the weight vectors;

updating (404) the loss function by increasing an included angle between any two of the weight vectors; and

optimizing (405) the data identification model to be optimized based on the updated loss function.

2. The method according to claim 1, wherein the data identification model to be optimized is obtained through deep neural network training.

3. The method according to claim 1, wherein optimizing the data identification model to be optimized based on the updated loss function further comprises:

training a new data identification model based on the updated loss function, wherein the new data identification model is a data identification model after optimization is performed on the data identification model to be optimized.

4. The method according to claim 2 or 3, wherein the data identification model is obtained through training by causing a function value of the loss function to be minimum.

5. The method according to claim 1, 2 or 3, wherein the loss function comprises Softmax loss function.

6. The method according to claim 1, 2 or 3, wherein one class corresponds to one weight vector.

7. The method according to claim 6, wherein the weight vectors are M-dimensional vectors, where M is an integer greater than 1.

8. The method according to claim 1, 2 or 3, wherein the data comprises one of image data, voice data or text data.

9. The method according to claim 1, 2 or 3, wherein the loss function comprises Logit loss function.

10. The method according to claim 1, 2 or 3, wherein the loss function comprises feature loss function.

11. The method according to claim 2, wherein the data identification model to be optimized is obtained through convolutional neural network training.

12. A data identification method, comprising:

performing data identification using an optimized data identification model obtained by the method for optimizing a data identification model according to one of claims 1 to 11.

13. A computer readable recording medium having stored thereon program instructions that, when executed by a computer, are used for implementing the method according to claims 1-12.

Figure 1

$$\frac{e}{\Sigma e}$$

softmax

W[TxN]

x[Nx1]

logits[Tx1]

prob[Tx1]

**Figure 2**

Which ID?

Probability
feature

Model

Training data

Figure 3A

Same ID?

Feature

Similarity
calculation

DNN model

Input

Figure 3B

Acquire loss function of data identification model to be optimized — 401

Calculate weight vectors in loss function which correspond to classes — 402

Perform normalization processing on weight vectors — 403

Update loss function by increasing an included angle between any two of weight vectors — 404

Optimize data identification model to be optimized based on the updated loss function — 405

**Figure 4**

Data identification device 500

Processor 501

Communication unit 502

Storage unit 503

Figure 5

CPU 701   ROM 702   RAM 703

704

Input/output interface 705

Input part 706   Output part 707   Storage part 708   Communication part 709   Driver 710

700

Detachable medium 711

**Figure 6**

Europäisches
Patentamt

European
Patent Office

Office européen
des brevets

# EUROPEAN SEARCH REPORT

Application Number

EP 20 15 1942

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Jiankang Deng ET AL: "ArcFace: Additive Angular Margin Loss for Deep Face Recognition", 2019 IEEE/CVF Conference on Computer Vision and Pattern Recognition (CVPR), 20 November 2018 (2018-11-20), pages 4685-4694, XP055708085, DOI: 10.1109/CVPR.2019.00482 ISBN: 978-1-7281-3293-8 Retrieved from the Internet: URL:https://arxiv.org/pdf/1801.07698v2.pdf [retrieved on 2020-06-23] * Section 2; Algorithm 1; figures 1, 2 * | 1-13 | INV. G06K9/62 G06N3/04 G06N3/08 |
| X | Weiyang Liu ET AL: "SphereFace: Deep Hypersphere Embedding for Face Recognition", arXiv - 1611.07004v2, July 2017 (2017-07), pages 6738-6746, XP055708086, DOI: 10.1109/CVPR.2017.713 ISBN: 978-1-5386-0457-1 Retrieved from the Internet: URL:https://arxiv.org/pdf/1704.08063.pdf [retrieved on 2020-06-23] * Section 3; figure 2 * | 1-13 | TECHNICAL FIELDS SEARCHED (IPC) G06K |
| A | XIAOBO WANG ET AL: "Ensemble Soft-Margin Softmax Loss for Image Classification", ARXIV.ORG, CORNELL UNIVERSITY LIBRARY, 201 OLIN LIBRARY CORNELL UNIVERSITY ITHACA, NY 14853, 10 May 2018 (2018-05-10), XP080876804, * Section 3 * | 1-13 | |

The present search report has been drawn up for all claims

| Place of search | Date of completion of the search | Examiner |
|---|---|---|
| The Hague | 23 June 2020 | Craciun, Paula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                            
& : member of the same patent family, corresponding document

EPO FORM 1503 03.82 (P04C01)